# EUROPÄISCHE PATENTANMELDUNG

(11) **EP 3 040 771 A1**
(43) Veröffentlichungstag der Anmeldung: **06.07.2016**
(21) Anmeldenummer: 15000003.2
(22) Anmeldetag: 05.01.2015
(51) Int. Cl.: G03B 11/04

(54) **Vorrichtung zur Abdeckung eines Kameraobjektives und Anordnung mit einer derartigen Vorrichtung**

(71) Anmelder: Osmanovic, Haris, 8155 Niederhasli (CH)
(72) Erfinder: Osmanovic, Haris, 8155 Niederhasli (CH)
(74) Vertreter: Schalch, Rainer

(57) **Zusammenfassung**

Zur wahlweisen Freigabe oder Abdeckung des Kameraobjektivs (11) eines Geräts ist eine Vorrichtung (1) vorgesehen, die einen pyramidenstumpfförmigen Körper (2) und einen an diesem beweglich angeordneten Abdeckteil (4) aufweist. Ferner ist ein Applikator (31) beschrieben, der die Positionierung der Vorrichtung (1) am Gerät erleichtert und nach der Befestigung der Vorrichtung von dieser getrennt wird. Die Vorrichtung stört beim Einbringen und Herausnehmen des Geräts aus einer Tasche weniger als bekannte Vorrichtungen und die Anordnung erlaubt das einfache Anbringen der Vorrichtung am Gerät.

## Beschreibung

### Gebiet der Erfindung

Die Erfindung betrifft eine Vorrichtung zur wahlweisen Abdeckung oder Freigabe eines Kameraobjektivs gemäss Oberbegriff des Anspruchs 1. Weiter betrifft die Erfindung eine Anordnung aus einer derartigen Vorrichtung und einem Applikator.

### Hintergrund

Es sind Vorrichtungen zur Abdeckung bzw. Freigabe des Objektivs von in Mobiltelefonen, Tabletcomputern oder Computermonitoren integrierten Kameras bekannt. So zum Beispiel aus WO 2009/137600 A2 oder aus DE 20 2004 000 421 U1. Ferner werden solche Produkte unter der Bezeichnung "Webcam Cover" unter www.c-slide.com angeboten. Solche Abdeckungen sollen davor schützen, dass die ungewollt aktivierte Kamera Bilder aufnimmt, die von Unbefugten gesehen werden können. Ferner können die Abdeckungen als Schutz des Objektivs wirken. Es zeigt sich, dass die bekannten Abdeckungen bei mechanischen Einwirkungen auf das Gerät ungewollt lose werden und abfallen können oder leicht beschädigt werden können. Dies insbesondere, wenn damit die Kamera eines Mobiltelefons oder Tabletcomputers abgedeckt wird, welche ohne Hülle in Hosen- oder Handtaschen mitgeführt werden. Ferner sind die Abdeckungen nur mit Mühe am Gerät positionierbar und befestigbar, da sie im Falle eines Mobiltelefons oder Tablets sehr klein sein sollten

### Darstellung der Erfindung

Der Erfindung liegt die Aufgabe zu Grunde eine verbesserte Abdeckung zu schaffen.

Dies wird bei der eingangs genannten Abdeckung dadurch erreicht, dass der Körper ein Pyramidenstumpf oder ein Kegelstumpf ist.

Durch diese Formgebung wird verhindert, dass die Vorrichtung bei der Handhabung des Geräts an einem anderen Gegenstand hängen bleibt. Die Form des Körpers bewirkt ein Abgleiten eines Gegenstands von der Vorrichtung und sorgt somit dafür, dass die Vorrichtung sicher am Gerät befestigt bleibt. Dies erlaubt auch die Verwendung einer nur schwach und/oder partiell angeordneten Klebverbindung zwischen Vorrichtung und dem Gerät, so dass ein Lösen der Vorrichtung vom Gerät leichter möglich ist, wenn dies gewünscht ist. Der Körper kann in seinem unteren Bereich bzw. anschliessend an seine Unterseite zunächst eine Basis aufweisen, die kein Pyramidenstumpf oder Kegelstumpf ist, so dass der Körper nicht vollständig aber doch im Wesentlichen die Form eines Pyramidenoder Kegelstumpfs aufweist.

Die Unterseite des Körpers kann die Fläche zur Klebebefestigung bilden. Damit steht entlang der ganzen Unterseite Platz für ein Klebemittel zur Verfügung. Dies ist in der Regel ein doppelseitiges Klebeband, welches einseitig am Körper haftet und an der anderen Seite mit einer abziehbaren Abdeckung versehen ist. Es kann aber auch ein flüssiger oder gelförmiger Klebstoff auf die Unterseite aufgebracht werden, wenn die Vorrichtung am Gerät befestigt werden soll. Alternativ zur Anordnung eines Klebemittels an der ganzen Unterseite können an der Unterseite des Körpers mehrere zur Klebebefestigung vorgesehene Flächen angeordnet sind, welche als Füsse des Körpers gegenüber der Unterseite des Körpers erhöht sind. Dies lässt bei der Befestigung der Vorrichtung am Gerät einen dort einen Spalt zwischen Vorrichtung und Gerät, wo kein Fuss vorgesehen ist, was das Entfernen der Vorrichtung erleichtert, wenn dies gewünscht ist.

Der Abdeckteil kann am Körper verschiebbar oder verschwenkbar angeordnet sein. Vorzugsweise ist der Abdeckteil verschiebbar in einander gegenüberliegenden Nuten des Körpers angeordnet ist und durch einen Schlitz im Körper hindurch geführt. Auf diese Weise ist der Abdeckteil bei geschlossener Abdeckung weitgehen im Körper versenkt und behindert die Handhabung des Geräts nicht bzw. läuft ebenfalls nicht Gefahr beschädigt zu werden, wenn das Gerät in eine Tasche eingebracht wird.

In einem weiteren Aspekt der Erfindung soll eine erleichterte Montage einer Vorrichtung zur Abdeckung eines Kameraobjektivs eines Geräts ermöglicht werden. Es hat sich gezeigt, dass solche Vorrichtungen, insbesondere wegen ihrer geringen Abmessungen, nur schwierig korrekt platzierbar sind.

Diese Aufgabe wird durch eine Anordnung gelöst, umfassend eine Vorrichtung zur wahlweisen Abdeckung oder Freigabe des Objektivs einer in einem Gerätegehäuse angeordneten Kamera, wobei die Vorrichtung einen auf dem Gerätegehäuse befestigbaren Körper mit einer Ausnehmung für den Lichteintritt in das Objektiv und ein am Körper beweglich angeordnetes Abdeckteil umfasst, mit welchem die Ausnehmung öffenbar oder schliessbar ist, wobei der Körper an seiner Unterseite mit mindestens einer zur Klebebefestigung am Gerätegehäuse vorgesehenen Fläche versehen ist und an seiner Oberseite das Abdeckteil trägt, und umfassend einen mit der Vorrichtung zusammenwirkenden Applikator, wobei der Körper der Vorrichtung und der Applikator lösbar aneinander befestigt oder aneinander befestigbar sind. Die Vorrichtung ist bevorzugt eine der vorgenannten Vorrichtungen bzw. eine Vorrichtung nach einem der Ansprüche 1 bis 7. Die Anordnung kann aber auch eine Vorrichtung sein, wie sie aus dem Stand der Technik bekannt ist, wenn sie zur lösbaren Befestigung am Applikator ausgestaltet wird.

Als Applikator wird ein Gegenstand verstanden, welcher es erlaubt, von Hand gut gegriffen und am Gerät positioniert zu werden, so dass diese Schritte leicht ausgeführt werden können, womit die Vorrichtung genau am Gerät platziert werden kann. Der Applikator hält dabei die Vorrichtung so beabstandet vom Gerät, dass das Klebemittel der Vorrichtung noch nicht in Kontakt mit dem Gerät kommt. Ist die gewünschte Position erreicht, so kann die Vorrichtung am Gerät befestigt bzw. mit ihrem Klebemittel in Kontakt mit dem Gerät gebracht werden, z.B. am Gerät angedrückt werden. Dabei löst sich die Vorrichtung vom Applikator oder dieser nach nachträglich von der Vorrichtung gelöst werden. Der Applikator kann Füsse aufweisen oder kann entsprechend geformt sein, um den am Applikator gehaltenen Körper bei der Positionierung vom Gehäuse beabstandet zu halten.

In einer Ausführung ist der Applikator bandförmig ausgestaltet und weist ein Bedienteil und als Halteteil für die Vorrichtung vom Bedienteil abstehende Ausformungen auf, die in Nuten im Körper der Vorrichtung eingreifen.

Bei einer anderen Ausführung sind der Halteteil des Applikators und der Körper der Vorrichtung mit mindestens einem Verbindungselement verbunden, welches zum Lösen des Körpers zerstörbar ausgeführt ist.

Bei einer weiteren Ausführung ist der Applikator ein Werkzeug, insbesondere ein zangenartiges Werkzeug, welches an seinem Halteteil mit Eingriffsmitteln versehen ist, welche zum Eingriff in Mittel des Körpers ausgestaltet sind, die mit den Eingriffsmitteln zusammenwirkend vorgesehen sind.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigt:
Figur 1 eine schematische Draufsicht auf eine Ausführungsform der Vorrichtung, die auf einem Mobiltelefon angeordnet ist;
Figur 2 eine Seitenansicht der Vorrichtung von Figur 1;
Figur 3 eine schematische Draufsicht auf eine weitere Ausführungsform der Vorrichtung;
Figur 4 eine Seitenansicht der Vorrichtung von Figur 3;
Figur 5 den Körper einer Ausführungsform, die im Wesentlichen Figur 1 entspricht, in vertikaler Schnittansicht;
Figur 6 eine Seitenansicht einer Anordnung mit einer Vorrichtung ähnlich derjenigen von Figur 1 und einem zugehörigen Applikator;
Figur 7 eine schematische Draufsicht auf eine Anordnung mit Vorrichtung und Applikator;
Figur 8 eine Draufsicht auf eine Anordnung mit einer Vorrichtung ähnlich derjenigen von Figur 3 und einem zugehörigen Applikator;
Figur 9 eine Anordnung mit einer anders ausgestalteten Verbindung zwischen Vorrichtung und Applikator; und
Figur 10 eine Seitenansicht einer weiteren Ausführung der Vorrichtung.

### Weg(e) zur Ausführung der Erfindung

An Hand der Figuren werden verschiedene Ausführungen von Vorrichtungen zur Abdeckung von Kameraobjektiven dargestellt. Das Kameraobjektiv ist vollständig oder teilweise in einem Gerätegehäuse angeordnet. Das Gerät ist in der Regel ein Mobiltelefon, ein Tabletcomputer, ein Computermonitor oder ein anderes mit einer Kamera versehenes Gerät sowie eine Kamera mit einem eigenen Gerätegehäuse (stand alone camera). Die Vorrichtung gemäss der Erfindung wird auf dem Gerätegehäuse oberhalb des Objektivs befestigt. Dies erfolgt in der Regel mit einem doppelseitig wirkenden Klebemittel, welches in der Regel bereits einseitig an der Vorrichtung befestigt ist und an der anderen Seite mit einer entfernbaren Abdeckung versehen ist, zum Beispiel einem abziehbaren Silikonpapier. Die entfernbare Abdeckung des Klebmittels wird erst bei der Aufbringung der Vorrichtung auf das Gerätegehäuse entfernt. Alternativ muss das Klebemittel vor der Aufbringung zunächst an der Vorrichtung angebracht werden. Das Klebemittel kann auch als flüssiges oder gelartiges Klebemittel vorliegen, welches aus einer Packung auf die Unterseite der Vorrichtung aufgebracht wird. Dies wird, da dem Fachmann entsprechende Klebemittel bekannt sind, hier nicht weiter erläutert.

Die nachfolgend erläuterten Vorrichtungen sind in der Regel aus einem handelsüblichen Kunststoff gefertigt. Es ist aber auch möglich einen Teil der Vorrichtung aus Metall zu fertigen, zum Beispiel das Abdeckteil und ein allfälliges Scharnier. Ein Abdeckteil aus Metall ermöglicht auch dessen magnetisches Halten am Körper, wenn dieser mit einem magnetischen Bereich versehen ist.

Die Masse der Vorrichtungen sind so gewählt, dass sie über dem jeweiligen Objektiv platzierbar sind, ohne dass andere Teile des Geräts, z.B. ein Lautsprecher, beeinträchtigt werden. So können die Vorrichtungen zum Beispiel an ihrer Unterseite einen Durchmesser von 10 mm aufweisen und verjüngen sich entsprechend der Form des Körpers zu ihrer Oberseite hin. Die Vorrichtungen sind so ausgeführt, dass die Aufnahme von Bildern mittels der Kamera bei von der Vorrichtung freigegebenem Objektiv nicht beeinträchtigt wird und insbesondere keine Vignettierung der aufgenommenen Bilder stattfindet. Dies bedingt allenfalls je nach Gerät verschiedene Vorrichtungen. Die Vorrichtungen weisen jeweils einen Körper auf, der am Gerätegehäuse befestigt wird und sie weisen einen beweglich am Körper angeordneten Abdeckteil auf, der zur Abdeckung bzw. Freigabe des Objektivs bewegbar ist. Die Bewegung kann insbesondere eine Schwenk- oder Schiebebewegung sein und auch ein Auf- und Zuklappen umfassen. Die Bewegung wird manuell ausgeführt.

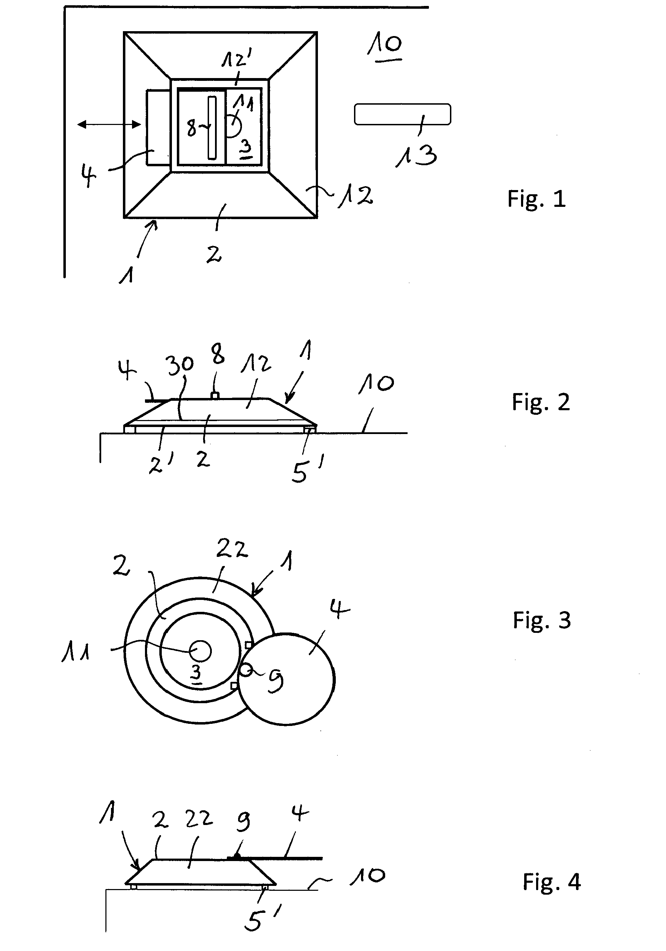

Die Figuren 1 und 2 zeigen ein erstes Ausführungsbeispiel der Vorrichtung. Die Vorrichtung 1 weist jeweils den Körper 2 auf, der zur Platzierung auf dem Gehäuse 10 eines Gerätes über dessen Kameraobjektiv 11 vorgesehen ist. Der Körper 2 ist in diesem Beispiel ein vierseitiger Pyramidenstumpf 12. Auch eine Ausführung als dreiseitiger Pyramidenstumpf ist möglich oder mit mehr als vier Seiten. Bevorzugt ist die Ausführung eines Pyra-midenstumpfs mit gleich langen Seiten, also wie hier gezeigt mit einer quadratischen Grundfläche, aber es sind auch ungleich lange Seiten möglich, also insbesondere eine rechteckige Grundfläche. In der Figur 1 ist ein Lautsprecher 13 des Geräts bzw. des Mobiltelefons angedeutet. Entsprechend ist ersichtlich, dass der Körper 2 der Vorrichtung geringe Abmessungen aufweist. Dies auch in der in Figur 2 ersichtlichen Höhe, so dass die Vorrichtung für den Gerätebenutzer nicht störend ist.

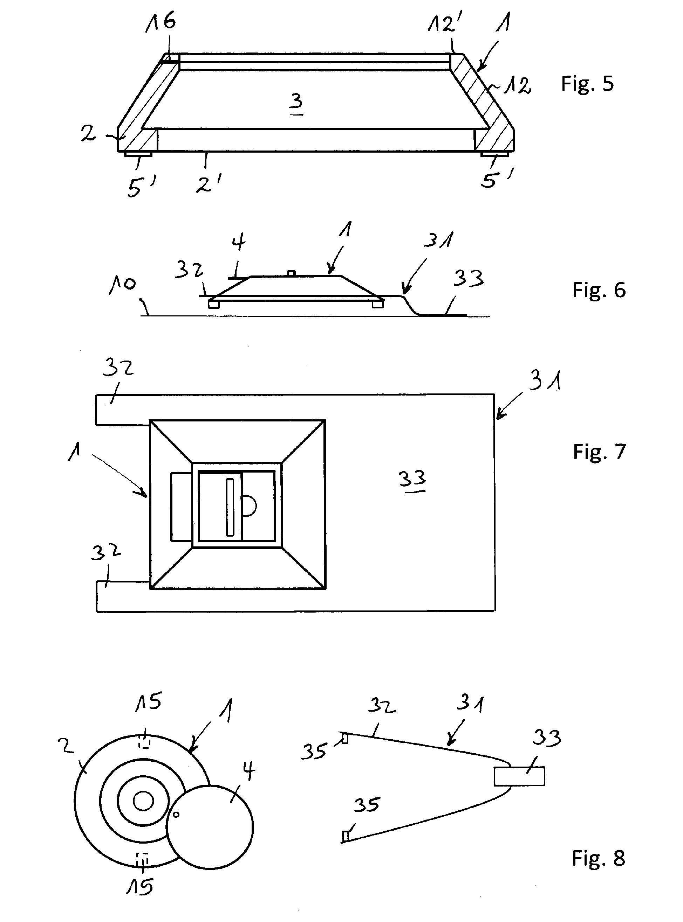

An der Oberseite des Körpers 2 ist ein Abdeckteil 4 beweglich am Körper 2 angeordnet. In diesem Beispiel ist dies ein hin- und her schiebbares Abdeckteil 4 bzw. ein Schieber. In diesem Beispiel ist der Schieber mit zwei parallelen Seitenkanten des Schiebers in Nuten des Körpers eingeführt, die unterhalb der Oberseite 12' des Körpers angeordnet sind. In der Schnittdarstellung eines Körpers 2 in Figur 5 ist eine solche Nut sichtbar und dort mit der Linie 14 angedeutet. Der Schieber 4 tritt durch einen Schlitz (in Figur 5 mit der Linie 16 angedeutet) hindurch, so dass der Abdeckteil in Richtung des Pfeils in Figur 1 hin- und her schiebbar ist. Dadurch wird das Objektiv 11 freigegeben oder abgedeckt, wobei in Figur 1 eine Zwischenstellung dargestellt ist, in welcher der Schieber das Objektiv zum Teil abdeckt. Der Abdeckteil 4 kann ein Bedienmittel 8 aufweisen, um die Bedienung mit einem Finger zu erleichtern. Entgegen der Darstellung der Figuren 2 und 6 kann das Bedienmittel weniger weit hervorragen, um keinen Angriffspunkt für ein ungewolltes Öffnen des Schiebers zu geben. Der Schieber ist auf die gezeigte Weise im Körper angeordnet und hindert somit die Handhabung des Geräts nicht bzw. der Schieber wird auch nicht beschädigt, wenn das Gerät in eine Tasche gesteckt wird.

Das Abdeckteil 4 kann aber auch oberhalb des Körpers 2 angeordnet sein. In diesem Fall weist das Abdeckteil 4 bzw. der Schieber auf seiner Unterseite Ausformungen auf. Diese können ebenfalls in die dargestellten seitlichen Nuten des Körpers eingreifen und darin laufen. Es können aber am Körper auch oberseitige Nuten im Körper 2 vorgesehen sein, zum Beispiel in Schwalbenschwanzform, in welchen die Ausformungen des Abdeckteils gehalten werden und darin zur Verschiebung des Abdeckteils laufen.

Die Figuren 3 und 4 zeigen ein weiteres Ausführungsbeispiel. Gleiche Bezugszeichen bezeichnen wiederum gleiche oder funktionsgleiche Teile wie in den Figuren 1 und 2. In dieser Ausführung ist das Gehäuse 2 als Kegelstumpf 22 ausgeführt. Das Abdeckteil könnte wiederum ein rechteckiger oder quadratischer Schieber sein, da es in der Regel keine Rolle spielt, wenn zwischen dem Körper und dem Abdeckteil seitlich ein geringfügiger Spalt verbleibt, da durch diesen hindurch keine sinnvolle Bilderfassung durch das Objektiv möglich ist. Im gezeigten Beispiel ist indes ein schwenkbares Abdeckteil 4 darge-stellt. Ein solches könnte auch beim Körper gemäss den Figuren 1 und 2 vorgesehen sein. In diesem Beispiel ist der Abdeckteil oberhalb des Körpers 2 angeordnet und um eine Schwenkachse 9 schwenkbar. In dieser liegt auch ein Befestigungsmittel, das den Abdeckteil 4 am Körper 2 hält. Insbesondere werden Schwenkachse und Befestigungsmittel durch einen Bolzen gebildet. Das Abdeckteil kann auch in dieser Ausführung in einer Ausnehmung des Körpers unterhalb von dessen Oberseite angeordnet sein, so dass das Abdeckteil im geschlossenen Zustand durch den Körper geschützt ist. Eine nur angedeutete Hemmung zwischen Körper und Abdeckteil hält dieses offen.

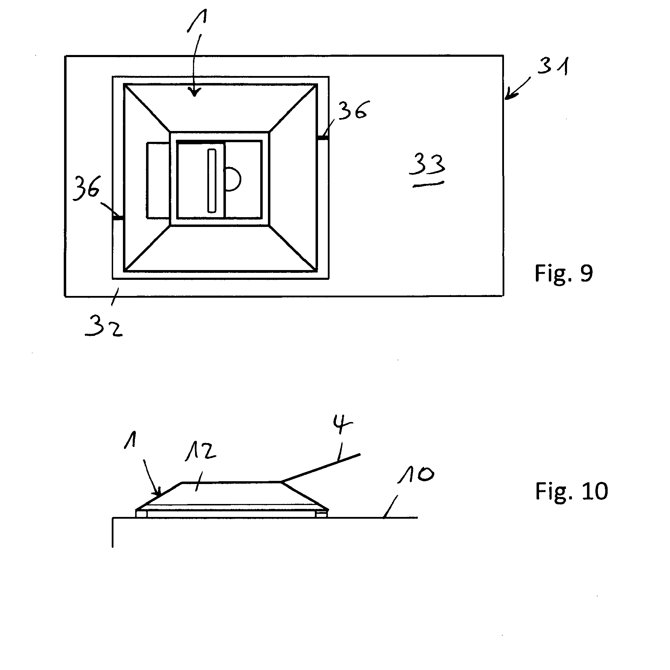

Figur 10 zeigt eine weitere Ausführung mit einem Klappdeckel als Abdeckteil 4. Dieser ist zum Beispiel mit einem Filmscharnier einstückig mit dem Körper 2 ausgebildet. Es kann aber auch ein separates Scharnier vorgesehen sein. Der Klappdeckel bzw. das Scharnier kann so ausgeführt sein, dass der Abdeckteil 4 in der gezeigten Stellung offen steht, wenn er nicht über die Ausnehmung 3 umgeklappt und mit einem nicht dargestellten Haltemittel geschlossen bzw. in Abdeckstellung gehalten wird. Auch die Ausführungen der Figuren 1 bis 4 mit schiebbarem oder schwenkbaren Abdeckteil weisen vorzugsweise ein Haltemittel auf, welches den Abdeckteil jeweils in der das Objektiv abdeckenden Position festhalten, bis wieder manuell auf den Abdeckteil eingewirkt wird, um das Objektiv freizugeben.

Figur 5 zeigt eine Schnittansicht durch einen Körper der Vorrichtung. Dabei ist die Ausnehmung 3 gut ersichtlich, welche über dem Objektiv des Gerätes zu liegen kommt, so dass je nach Position des in Figur 5 nicht dargestellten Abdeckteils die Kamera Bilder aufnehmen kann oder nicht. Es ist ersichtlich, dass die Ausnehmung 3 ebenfalls pyramidenstumpfförmig oder ggf. kegelstumpfförmig ist, was bevorzugt ist. Der Körper 2 ist auf sei-ner Aussenseite im Wesentlichen pyramidenstumpfförmig oder kegelstumpfförmig. In Figur 5 ist der Körper 2 mit einem Sockel dargestellt, von dem aus sich der Pyramidenstumpf oder Kegelstumpf erstreckt. Ein solcher Sockel kann vorhanden sein oder nicht. Ist kein Sockel vorgesehen, so ist der Körper 2 wie in den Figuren 2 und 4 ab seiner Basis bzw. Unterseite als Pyramidenstumpf oder als Kegelstumpf ausgeführt.

Die ganze Unterseite 12'' des Körpers kann die Fläche 5 bilden, an welcher das Klebemittel zur Befestigung am Gerätegehäuse angeordnet ist bzw. angeordnet wird. Es können aber auch nur einzelne Flächen 5' vorgesehen sein, die für die Anordnung des Klebemittels dienen. Diese Flächen können, wie in Figur 5 gezeigt, gegenüber der restlichen Unterseite des Körpers 2 abgehoben sein, so dass sie mit dem Klebemittel Füsse bilden, auf denen der Köper steht. Die Füsse können aber auch nur durch die Klebemittel selber gebildet sein, wenn diese nur partiell an der Unterseite des Körpers 2 angeordnet wird. Der Vorteil von einzelnen Füssen gegenüber einer Verklebung der ganzen Unterseite des Körpers 2 liegt in einer verbesserten Entfernbarkeit des Körpers, wenn die Vorrichtung wieder vom Gerät entfernt werden soll. In diesem Fall ermöglicht der zwischen den Füssen gebildete Schlitz zwischen der Oberfläche des Geräts und der Unterseite des Körpers die Einbringung eines Werkzeugs, zum Beispiel einer dünnen Messerklinge, mittels welchem das Klebemittel durchtrennt werden kann. Die genannten Ausführungen zu den Flächen 5 bzw. 5' gelten auch für die anderen Ausführungen der Vorrichtung 1.

Ein weiterer Aspekt der Erfindung, welcher bevorzugt mit den vorgängig erläuterten Vorrichtungen kombiniert ist, betrifft eine Anordnung aus einer Vorrichtung und einem Applikator. Wie aus den obigen Erläuterungen und den Figuren ersichtlich, kann es schwierig sein, eine Vorrichtung richtig auf dem jeweiligen Gerät zu platzieren. Ist die Klebung erfolgt, so ist eine Korrektur der Lage in der Regel nicht mehr möglich. Eine Kombination aus einer Vorrichtung und einem Applikator ermöglicht es, dass die Vorrichtung mittels des Applikators richtig platziert werden kann, worauf sie mit dem Klebemittel in Kontakt mit dem Gehäuse des Geräts gebracht wird. Dabei oder danach kann der Applikator von der Vorrichtung getrennt werden.

Die Figuren 6 bis 9 zeigen verschiedene Ausführungsbeispiele. Gemeinsam ist, dass der Körper 2 lösbar an einem Applikator 31 gehalten ist und dass der Applikator ausgeführt ist, um den Körper 2 bzw. dessen Unterseite mit dem Klebemittel beabstandet von der Oberseite des Geräts 10 zu halten. Dies erlaubt somit eine einfache Positionierung des Körpers 2 durch Bewegung des Applikators auf der Oberfläche des Geräts. Ist die korrekte Position des Körpers 2 erreicht, so kann dieser manuell nach unten in Richtung auf die Oberfläche des Geräts gedrückt werden, was den Körper 2 mittels des Klebemittels am Gerät fixiert. Dann kann der Applikator vom Körper 2 entfernt werden oder er löst sich bereits beim Andrücken des Körpers am Gerät. Nach der Montage des Körpers hat der Applikator keine Funktion mehr und kann entsorgt werden. Der Applikator kann Füsse aufweisen oder kann entsprechend geformt sein, um den am Applikator gehaltenen Körper bei der Positionierung vom Gehäuse beabstandet zu halten.

Die Figuren 6 und 7 zeigen eine Ausführung, bei welcher der Applikator 31 von einem bandförmigen Element aus Kunststoff oder Metall gebildet ist. Der Applikator bildet eine Aufnahme für den Körper 2, in welcher der Körper lösbar gehalten ist. Diese Aufnahme 32 liegt in der Seitenansicht von Figur 6 nach oben versetzt gegenüber einem Bedienteil 33, welches auf der Oberfläche des Geräts aufgelegt und auf dieser verschoben werden kann. Dadurch wird der Körper über der Oberfläche des Geräts von dieser beabstandet verschoben, bis die richtige Position über dem Objektiv des Geräts erreicht ist. In diesem Beispiel wird der Körper 2 am Applikator 31 durch zwei Zinken 32 einer vom Applikator gebildeten Gabel gehalten, welche Zinken in seitliche Nuten des Körpers eingreifen. Eine solche Nut ist in Figur 2 mit der Linie 34 dargestellt. Wird der Körper 2 nach unten gedrückt, so biegen sich die Zinken 32 nach unten und erlauben es, den Körper 2 mit dem Klebemittel am Gehäuse 10 anzudrücken, wodurch der Körper 2 dort haftet. Danach wird der Applikator vom Körper 2 entfernt, indem die Gabelzinken 32 aus den Nuten 34 gezogen werden.

Eine ähnliche Ausführung ist in Figur 9 in Draufsicht gezeigt. Die Seitenansicht würde sich grundsätzlich gleich wie Figur 6 darstellen. Der Körper 2 ist im Beispiel von Figur 9 mit mindestens einem Element 36 am Applikator 31 befestigt. Nachdem der Körper positioniert und durch Andrücken am Gerät befestigt worden ist, werden die Elemente 36 zerstört bzw. vom Körper entfernt, so dass sich der Körper 2 und der Applikator 31 trennen lassen. Die gezeigte Position der Elemente 36 ist nur ein Beispiel, diese Elemente könnten auch an anderer Stelle zwischen Körper und Applikator angeordnet sein.

Figur 8 zeigt eine weitere Ausführung, bei welcher der Applikator 31 ein zangenartiges Werkzeug mit Eingriffsteilen 35 ist, welche in entsprechend ausgestaltete Eingriffsöffnungen 37 im Körper eingreifen können. In diesem Fall wird zunächst der Körper an dem Applikator befestigt, indem die Teile 35 und 37 in Eingriff gebracht werden. Dann wird der Körper mittels des Applikators platziert und er kann auch mittels des Applikators auf der Oberfläche angedrückt werden. Danach werden Körper und Applikator wieder getrennt, indem die Zange auseinander gebogen wird, so dass deren Eingriffsteile 35 aus den Eingriffsöffnungen 37 des Körpers entfernt werden. In diesem Fall erlaubt der Applikator als Werkzeug das vom Gerät beabstandete Halten der Vorrichtung durch den Benutzer.

Die Anordnung aus Applikator und Vorrichtung erlaubt das Platzieren von Vorrichtungen mit beliebig geformten Körpern. Vorzugsweise wird die Anordnung aber mit Vorrichtungen gemäss dem ersten Aspekt der Erfindung ausgeführt.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Vorrichtung (1) zur wahlweisen Abdeckung oder Freigabe des Objektivs einer in einem Gerätegehäuse angeordneten Kamera, wobei die Vorrichtung einen auf dem Gerätegehäuse befestigbaren Körper (2) mit einer Ausnehmung (3) für den Lichteintritt in das Objektiv und ein am Körper beweglich angeordnetes Abdeckteil (4) umfasst, mit welchem die Ausnehmung öffenbar oder schliessbar ist, wobei der Körper an seiner Unterseite (2') mit mindestens einer zur Klebebefestigung am Gerätegehäuse vorgesehenen Fläche (5; 5') versehen ist und bei seiner Oberseite das Abdeckteil trägt **dadurch gekennzeichnet, dass** der Körper im Wesentlichen ein Pyramidenstumpf (12) oder ein Kegelstumpf (22) ist.

2. Vorrichtung nach Anspruch 1, **dadurch gekennzeichnet, dass** die Ausnehmung (3) ebenfalls pyramidenstumpfförmig oder kegelstumpfförmig ist.

3. Vorrichtung nach Anspruch 1 oder 2, **dadurch gekennzeichnet, dass** die Unterseite (2') des Körpers (2) die Fläche (5) zur Klebebefestigung bildet.

4. Vorrichtung nach Anspruch 1 oder 2, **dadurch gekennzeichnet, dass** an der Unterseite (2') des Körpers (2) mehrere zur Klebebefestigung vorgesehene Flächen (5') angeordnet sind, welche als Füsse des Körpers gegenüber der Unterseite des Körpers erhöht sind.

5. Vorrichtung nach einem der Ansprüche 1 bis 4, **dadurch gekennzeichnet, dass** an der mindestens einen Fläche (5; 5') ein doppelseitig wirkendes Klebemittel angeordnet ist, welches an seiner der Fläche abgewandten Seite mit einem abziehbaren Abdeckmittel versehen ist.

6. Vorrichtung nach einem der Ansprüche 1 bis 5, **dadurch gekennzeichnet, dass** der Abdeckteil (4) am Körper (2) verschiebbar oder verschwenkbar angeordnet ist.

7. Vorrichtung nach einem der Ansprüche 1 bis 6, **dadurch gekennzeichnet, dass** der Abdeckteil im geschlossenen Zustand im Wesentlichen im Körper angeordnet zu liegen kommt.

8. Vorrichtung nach Anspruch 7, **dadurch gekennzeichnet, dass** der Abdeckteil (4) verschiebbar in einander gegenüberliegenden Nuten (14) des Körpers (2) angeordnet ist und durch einen Schlitz (16) im Körper hindurch geführt ist.

9. Anordnung (1, 31) umfassend eine Vorrichtung (1) zur wahlweisen Abdeckung oder Freigabe des Objektivs einer in einem Gerätegehäuse angeordneten Kamera, wobei die Vorrichtung einen auf dem Gerätegehäuse befestigbaren Körper (2) mit einer Ausnehmung (3) für den Lichteintritt in das Objektiv und ein am Körper beweglich angeordnetes Abdeckteil (4) umfasst, mit welchem die Ausnehmung öffenbar oder schliessbar ist, wobei der Körper an seiner Unterseite (2') mit mindestens einer zur Klebebefestigung am Gerätegehäuse vorgesehenen Fläche (5; 5') versehen ist und bei seiner Oberseite das Abdeckteil trägt, wobei die Vorrichtung insbesondere eine Vorrichtung nach einem der Ansprüche 1 bis 8 ist, und umfassend einen mit der Vorrichtung (1) zusammenwirkenden Applikator (31) mit einem Bedienteil (33) und einem den Körper (2) der Vorrichtung haltenden Halteteil (32), wobei der Körper (2) der Vorrichtung und der Halteteil des Applikators lösbar aneinander befestigt oder aneinander befestigbar sind und der Applikator zur vom Gerät beabstandeten Positionierung des Körpers ausgeführt ist.

10. Anordnung nach Anspruch 9, wobei der Applikator (31) bandförmig ausgestaltet ist und mit von dem Bedienteil (33) abstehenden Ausformungen (32) in Nuten (34) im Körper (2) der Vorrichtung (1) eingreift.

11. Anordnung nach Anspruch 9, wobei der Halteteil des Applikators (31) und der Körper (2) der Vorrichtung mit mindestens einem Verbindungselement (35) verbunden sind, welches zum Lösen des Körpers zerstörbar ausgeführt ist.

12. Anordnung nach Anspruch 9, wobei der Applikator (31) ein Werkzeug, insbesondere ein zangenartiges Werkzeug ist, welches an seinem Halteteil mit Eingriffsmitteln (35) versehen ist, welche zum Eingriff in mit den Eingriffsmitteln zusammenwirkend ausgestaltete Mittel (15) des Körpers (2) vorgesehen sind.
